# EUROPEAN PATENT SPECIFICATION

(11) **EP 2 684 444 B1**
(45) Date of publication and mention of the grant of the patent: **19.08.2015**
(21) Application number: 11859143.7
(22) Date of filing: 21.12.2011
(51) Int. Cl.: A01D 41/12, A01F 12/00

(54) **CROP THRESHING METHOD**
DRESCHVERFAHREN FÜR ERNTEGUT
PROCÉDÉ DE BATTAGE DES CULTURES

(30) Priority: 05.01.2011 KZ 20110005
(43) Date of publication of application: 15.01.2014
(73) Proprietor: Republican Public Enterprise "Kazakh National Agrarian University" of Ministry of Education and Science of the Republic of Kazakhstan, Almaty 050010 (KZ)
(72) Inventor: SADYKOV, Zharylkasyn, Almaty 050008 (KZ); ESPOLOV, Tlektes, Almaty 050010 (KZ); ZHALNIN, Eduard, Moscow 109428 (RU); AL'PEYSOV, Shohan, Almaty 050008 (KZ); SADYKOVA, Saule, Almaty 050008 (KZ)
(74) Representative: Jeck, Anton
(86) International application number: PCT/KZ2011/000020
(87) International publication number: WO 2012/115494

(56) References cited:
- SU-A1- 1 058 536
- SU-A1- 1 165 293
- SU-A1- 1 653 616
- SU-A1- 1 695 849
- SU-A1- 1 695 849
- US-A- 5 445 563
- US-A1- 2010 173 685

## Description

The invention relates to methods for threshing crops by magnetically treating the freshly threshed seeds in order to alter their biophysical, biochemical and physicochemical properties, and can be used in agriculture to magnetize seeds when threshing different types of crops during harvesting.

Known is the method for threshing and harvesting of crops wherein plants are cut by a combine harvester header and threshed with the thresher operating in a "sparing" mode [Sadykov, Zh.S. patent KZ No. 1131, A01D 91/04, 45/30, published 09.15.94, Bulletin No. 3].

A crop threshing method comprising threshing with separation of the mass of grain and chaff into the edible portion and the non-grain portion of the crop using a classic beater-type threshing drum is known from US 2010/173685 A1.

However, the use of the known threshing method when harvesting hard-to-thresh crops allows substantial loss of grain due to underthreshing, resulting in harvest shortfall.

The closest to the proposed method in Its technical essence is the crop threshing method wherein threshing is conducted with separating the mass of grain and chaff into the edible portion and the non-grain portion of the crop per classification of informal axioms of the working process of the threshing mechanism of a combine harvester [Zhalnin, E.V. 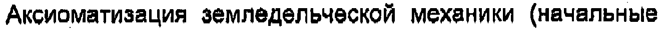 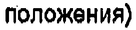 [Axiomatization of Agricultural Mechanics (Basic Terms)], M, VIM, 2002, p. 150-168]. The authors have selected this method as the prototype.

However, the known methods for threshing seed and grain crops also allows grain loss due to grain crushing and microdamage which results in reduced the germinating ability of the seeds and the yield of the crop, with 10% of microdamaged grain for each 1% of crushed grain resulting in reduced germinating ability of seeds and reduced yield.

Methods for treating seeds by exposing them to electromagnetic field, where it is possible to cause acceleration of certain biochemical reactions and thus facilitate alteration of a number of biophysical, biochemical and physicochemical properties, are known in the field:
SU 1 695 849 A1 discloses a threshing method in which the grain portion obtained after cutting the plants and grain separation Is subjected to a magnetic field (figures 2-4) either before threshing (- Δ 1) or after threshing (- Δ 3).
Another method discloses that by applying electromagnetic field, for instance, in the 3-30 Hz band it is possible to increase the germinating ability of seeds and the yield of plants (see, for instance, patents RU Nos. 2179792, 2134944, etc.). Also, by applying electromagnetic field in the same frequency band it is possible to accelerate the processes of extraction from root crops, particularly from sugar beets, and increase sugar yield and the storage life of the beets (see patents RU Nos. 2172094, 2172091, 2172095, 2172096, etc.).

However, all current methods for threshing crops and applying electromagnetic field to biological objects such as seeds etc. are not efficient enough, i.e., there is no threshing method that would take into account biological characteristics of particular freshly threshed seeds that are under particular conditions of movement, i.e., transport. And to achieve the best result it is necessary to act on a particular portion of freshly threshed seeds as it is transported to the grain hopper of the combine harvester - the seeds are treated with a special field with parameters that are specially selected for the specific type of a crop.

Thus, the invention is new and has no analogues.

### Disclosure of Invention

The technical objective of the claimed invention is the possibility to take into account specific features of freshly threshed seeds. This is accomplished by selecting magnetic field with the most efficient parameters, apply it to a portion of seeds during the threshing process in order to activate or suppress biological processes, in particular, the germinating ability which affects changing the ripening times, increasing the yield and quality of crops, their storage life without loss of quality and other processes. The technical result comes down to expanding the functional capabilities of the crop threshing method with simultaneous magnetic treatment of the freshly threshed edible portion of the crop in a continuous mode.

The objective is achieved as follows.

In the crop thrashing method that includes threshing and separating the mass of grain and chaff into the edible portion and the non-grain portion of the crop, the freshly threshed edible portion of the crop is magnetically treated during the threshing process using a classic beater-type threshing drum in a continuous mode.

Furthermore, in the crop threshing method the magnetic treatment of the edible portion of the crop during the threshing process is performed with: increasing the initial speed of the edible crop portion entering the threshing mechanism from 1.8 to 8.0 m/s; increasing the distance between the hammers from 180 to 280 mm and accordingly the number of hammers from 6 to 12; increasing the developed length of the concave; and increasing the drum diameter from 380 to 800 mm with constant developed length of the concave.

Furthermore, in the crop threshing method the magnetic treatment of the edible portion of the crop during the threshing process is performed: with a smaller diameter (380-500 mm) threshing drum with the same concave length and the same feeding of the crop mass; different profiles of drum hammers; with an open drum (there is open space between the hammers and hammer supports) with hammers having a 30°-60° active lead angle; with a closed drum (a solid cylinder) with hammers attached to it that have no active lead angle (under 30°); with increasing concave "free cross-section" (the ratio of the area under the holes to the total concave area) from 0% to 40%; with variable distance between the concave bars from the start to the end of the concave - with larger distance in the first and last zones and smaller distance in the middle part of the concave; so that different magnetic fields act on the edible portion of each crop with optimum parameters for each crop.

### Embodiment of Invention

The crop threshing method is carried out using different versions of the traditional threshing technology wherein magnetic fields with optimum parameters are applied to moving freshly threshed portions of seeds.

In the crop threshing method wherein the threshing is conducted with separating the mass of grain and chaff into the edible portion and the non-grain portion of the crop, the freshly threshed edible portion of the harvest is magnetically treated during the threshing process using a classic beater-type threshing drum in a continuous mode, wherein each crop species (variety) is treated using magnetic field with optimum parameters.

During the magnetic treatment of the edible portion of the crop, as the initial speed of feeding the crop mass to the threshing mechanism increases from 1.8 to 8,0 m/s the grain separation through the concave increases exponentially up to a certain point; grain underthreshing, straw breakage and unevenness of torque on the drum shaft decrease linearly, wherein at a low speed of feeding the mass to the drum the difference between the extreme torque values is as high as 50%; increasing the distance between hammers from 180 to 280 mm and accordingly the number of hammers from 6 to 12 has no significant effect on grain crushing, but as the number of hammers increases and the distance between them decreases within the above ranges the underthreshing of the wheat crop mass decreases; the grain separation decreases; power consumption of the threshing process decreases; as the developed length of the concave increases, the grain separation and straw breakage increase significantly (linearly) and grain damage is less intensive while underthreshing substantially decreases; as the drum diameter increases from 380 to 800 mm with constant devel-oped length of the concave the underthreshing increases, the drum kinetic energy increases, the drum rotation stabilizes due to smaller variation of its angular velocity, and with this the grain separation and straw breakage decrease while the grain damage is practically unchanged and the likelihood of being wrapped up with straw decreases.

Furthermore, in the magnetic treatment of the edible portion of the crop: with the same concave length and the same feed of the crop mass, smaller diameter (380-500 mm) threshing drums increase grain separation, capture the mass more actively and have lower underthreshing while the profile of drum hammers has considerable effect on the agricultural features and production performance of the threshing mechanism; an open drum (there is open space between the hammers and hammer supports) with hammers having a 30°-60° active lead angle provides turbulent motion of threshed material in the threshing gap with prevailing longitudinal direction of grain movement from the drum center which results in increased grain separation compared to other versions of hammer design; a closed drum (a solid cylinder) with hammers attached to it that have no active lead angle (under 30°) creates a more or less laminar flow of crop mass in the threshing gap with prevailing tangential direction of grain movement, which causes a decrease of the separation effect and a higher grain damage; the "free cross-section" of the concave (the ratio of the area under the holes to the total concave area) has little effect on the underthresing of grain but as the "free cross-section" increases from 0% to 40% the grain damage decreases considerably, the grain separation increases, the straw breakage increases, and the energy consumption of the process increases; the distance between the concave bars from the start to the end of the concave must be variable, with larger distance in the first and last zones and smaller distance in the middle part of the concave.

Herein, the edible portions of various crops are exposed to different magnetic fields with optimum parameters for each crop.

The positive effect of using the proposed crop threshing method is manifested in activation or suppression of biological processes, particularly the germinating ability which affects the change of ripening times, the increase of crops yield and quality, which affects their storage life without loss of quality, and other processes.

The present invention has the following advantages over the prototype:
- the method simplicity is achieved due to the use of traditional processes and versions of threshing the crop mass;
- improved quality of treatment of freshly threshed seeds is achieved due to the fact that magnetic field freely permeates the portion of the seeds and treats the entire volume of grain transported by transporting modules and passing through their active and passive zones.

## Claims

1. The crop threshing method comprising threshing with separation of the mass of grain and chaff into the edible portion and the non-grain portion of the crop using a classic beater-type threshing drum, **characterised in that** during the threshing process the freshly threshed edible portion of the crop is magnetically treated in a continuous mode.

2. The crop threshing method per Claim 1, distinct in that the magnetic treatment of the edible portion of the crop during the threshing process is conducted with increasing the initial speed of the crop mass fed into the threshing mechanism from 1.8 to 8.0 m/s.

3. The crop threshing method per Claim 1, distinct in that the magnetic treatment of the edible portion of the crop during the threshing process is conducted with increasing the distance between hammers from 180 to 280 mm and accordingly increasing the number of hammers from 6 to 12.

4. The crop threshing method per Claim 1, distinct in that the magnetic treatment of the edible portion of the crop during the threshing process is conducted with increasing the developed length of the concave.

5. The crop threshing method per Claim 1, distinct in that the magnetic treatment of the edible portion of the crop during the threshing process is conducted with increasing the drum diameter from 380 to 800 mm with constant developed length of the concave.

6. The crop threshing method per Claim 1, distinct in that the magnetic treatment of the edible portion of the crop during the threshing process is conducted using a smaller diameter (380-500 mm) threshing drum with the same concave length and the same feed of the crop mass.

7. The crop threshing method per Claim 1, distinct in that the magnetic treatment of the edible portion of the crop during the threshing process is conducted with various profiles of drum hammers.

8. The crop threshing method per Claim 7, distinct in that the magnetic treatment of the edible portion of the crop during the threshing process is conducted using an open drum (there is open space between the hammers and hammer supports) with hammers that have a 30°-60° active lead angle.

9. The crop threshing method per Claim 7, distinct in that the magnetic treatment of the edible portion of the crop during the threshing process is conducted using a closed drum (a solid cylinder) with hammers attached to it that have no active lead angle (under 30°).

10. The crop threshing method per Claim 1, distinct in that the magnetic treatment of the edible portion of the crop during the threshing process is conducted with increasing the concave "free cross-section" (the ratio of the area under the holes to the total concave area) from 0% to 40%.

11. The crop threshing method per Claim 1, distinct in that the magnetic treatment of the edible portion of the crop during the threshing process is conducted using variable distance between the concave bars from the start to the end of the concave, with larger distance in the first and last zones and smaller distance in the middle part of the concave.

12. The crop threshing method per Claim 1, distinct in that different magnetic fields are applied to the edible portion of each crop with optimum parameters for each crop.

## Patentansprüche

1. Dreschverfahren für Erntegut, umfassend Dreschen mit Trennung der Masse aus Korn und Spreu in den essbaren Teil und den nicht aus Korn bestehenden Teil des Ernteguts unter Verwendung einer klassischen Dreschtrommel der schlagenden Art, **dadurch gekennzeichnet, dass** während des Drescheprozesses unter Verwendung einer klassischen Dreschtrommel der schlagenden Art der frisch gedroschene essbare Teil des Ernteguts wird magnetisch in einem kontinuierlichen Modus behandelt wird.

2. Dreschverfahren für Erntegut nach Anspruch 1, dadurch verschieden, dass die magnetische Behandlung des essbaren Teils des Ernteguts während des Dreschprozesses unter Erhöhung der anfänglichen Geschwindigkeit der Zufuhr der Erntegutmasse in den Dreschmechanismus von 1,8 bis 8,0 m/s erhöht wird.

3. Dreschverfahren für Erntegut nach Anspruch 1, dadurch verschieden, dass die magnetische Behandlung des essbaren Teils des Ernteguts während des Dreschprozesses unter Erhöhung des Abstands zwischen Hämmern von 180 bis 280 mm und dementsprechend Erhöhung der Anzahl von Hämmern von 6 bis 12 durchgeführt wird.

4. Dreschverfahren für Erntegut nach Anspruch 1, dadurch verschieden, dass die magnetische Behandlung des essbaren Teils des Ernteguts während des Dreschprozesses bei Erhöhung der entwickelten Länge des konkaven Abschnitts durchgeführt wird.

5. Dreschverfahren für Erntegut nach Anspruch 1, dadurch verschieden, dass die magnetische Behandlung des essbaren Teils des Ernteguts während des Dreschprozesses bei Erhöhung des Trommeldurchmessers von 380 bis 800 mm bei einer konstanten entwickelten Länge des konkaven Abschnitts durchgeführt wird.

6. Dreschverfahren für Erntegut nach Anspruch 1, dadurch verschieden, dass die magnetische Behandlung des essbaren Teils des Ernteguts während des Dreschprozesses unter Verwendung einer Dreschtrommel mit einem kleineren Durchmessers (380 - 500 mm) mit der gleichen Länge des konkaven Abschnitts und der gleichen Zufuhr der Erntegutmasse durchgeführt wird.

7. Dreschverfahren für Erntegut nach Anspruch 1, dadurch verschieden, dass die magnetische Behandlung des essbaren Teils des Ernteguts während des Dreschprozesses mit verschiedenen Profilen von Trommelhämmern durchgeführt wird.

8. Dreschverfahren für Erntegut nach Anspruch 7, dadurch verschieden, dass die magnetische Behandlung des essbaren Teils des Ernteguts während des Dreschprozesses durch die Verwendung einer offenen Trommel (es ist ein offener Raum zwischen den Hämmern und den Hammerträgern vorhanden) mit Hämmern durchgeführt wird, die einen aktiven vorderen Winkel von 30° bis 60° aufweisen.

9. Dreschverfahren für Erntegut nach Anspruch 7, dadurch verschieden, dass die magnetische Behandlung des essbaren Teils des Ernteguts während des Dreschprozesses durch die Verwendung einer geschlossenen Trommel (eines festen Zylinders) mit Hämmern durchgeführt wird, die daran befestigt sind, die keinen aktiven vorderen Winkel (unter 30°) aufweisen.

10. Dreschverfahren für Erntegut nach Anspruch 1, dadurch verschieden, dass die magnetische Behandlung des essbaren Teils des Ernteguts während des Dreschprozesses unter Erhöhung des konkaven Abschnitts (freien Querschnitts") (der Rate des Bereichs unter den Löchern zum gesamten konkaven Abschnitts) von 0 % auf 40 % durchgeführt wird.

11. Dreschverfahren für Erntegut nach Anspruch 1, dadurch verschieden, dass die magnetische Behandlung des essbaren Teils des Ernteguts während des Dreschprozesses durch die Verwendung eines variablen Abstands zwischen den konkaven Stangen vom Anfang bis zum Ende des konkaven Abschnitts durchgeführt wird, mit einem größeren Abstand im ersten und im letzen Bereich und einem kleineren Abstand im mittleren Bereich des konkaven Abschnitts.

12. Dreschverfahren für Erntegut nach Anspruch 1, dadurch verschieden, dass verschiedene magnetische Felder auf den essbaren Abschnitt jedes Ernteguts mit optimalen Parametern für jedes Erntegut angewendet werden.

## Revendications

1. Procédé de battage de récolte comprenant le battage avec séparation de la masse de céréales et de la paille en la partie comestible et la partie non de céréales de la récolte en utilisant un batteur du type secoueur classique, **caractérisé en ce que**, pendant le processus de battage, la partie comestible fraîchement battue de la récolte est traitée magnétiquement dans un mode continu.

2. Procédé de battage de récolte selon la revendication 1, **caractérisé en ce que** le traitement magnétique de la partie comestible de la récolte pendant le processus de battage est effectué en augmentant la vitesse initiale de la masse de récolte amenée dans le mécanisme de battage de 1,8 à 8,0 m/s.

3. Procédé de battage de récolte selon la revendication 1, **caractérisé en ce que** le traitement magnétique de la partie comestible de la récolte pendant le processus de battage est effectué en augmentant la distance entre les marteaux de 180 à 280 mm et en augmentant en conséquence le nombre de marteaux de 6 à 12.

4. Procédé de battage de récolte selon la revendication 1, **caractérisé en ce que** le traitement magnétique de la partie comestible de la récolte pendant le processus de battage est effectué en augmentant la longueur développée du contrebatteur.

5. Procédé de battage de récolte selon la revendication 1, **caractérisé en ce que** le traitement magnétique de la partie comestible de la récolte pendant le processus de battage est effectué en augmentant le diamètre du batteur de 380 à 800 mm avec une longueur développée constante du contrebatteur.

6. Procédé de battage de récolte selon la revendication 1, **caractérisé en ce que** le traitement magnétique de la partie comestible de la récolte pendant le processus de battage est effectué en utilisant un batteur de plus petit diamètre (380 à 500 mm) avec la même longueur de contrebatteur et la même fourniture de la masse de récolte.

7. Procédé de battage de récolte selon la revendication 1, **caractérisé en ce que** le traitement magnétique de la partie comestible de la récolte pendant le processus de battage est effectué avec divers profils de marteaux de batteur.

8. Procédé de battage de récolte selon la revendication 7, **caractérisé en ce que** le traitement magnétique de la partie comestible de la récolte pendant le processus de battage est effectué en utilisant un batteur ouvert (il y a un espace ouvert entre les marteaux et les supports de marteaux) avec des marteaux qui ont un angle d'inclinaison actif de 30° à 60°.

9. Procédé de battage de récolte selon la revendication 7, **caractérisé en ce que** le traitement magnétique de la partie comestible de la récolte pendant le processus de battage est effectué en utilisant un batteur fermé (cylindre plein) avec des marteaux attachés à celui-ci qui n'ont pas d'angle d'inclinaison actif (inférieur à 30°).

10. Procédé de battage de récolte selon la revendication 1, **caractérisé en ce que** le traitement magnétique de la partie comestible de la récolte pendant le processus de battage est effectué en augmentant la « section transversale libre » du contrebatteur (le rapport entre la surface sous les trous et la surface totale du contrebatteur) de 0%à40%.

11. Procédé de battage de récolte selon la revendication 1, **caractérisé en ce que** le traitement magnétique de la partie comestible de la récolte pendant le processus de battage est effectué en utilisant une distance variable entre les barres du contrebatteur du début à la fin du contrebatteur, avec une distance plus grande dans les première et dernière zones et une distance plus petite dans la partie centrale du contrebatteur.

12. Procédé de battage de récolte selon la revendication 1, **caractérisé en ce que** différents champs magnétiques sont appliqués à la partie comestible de chaque récolte avec des paramètres optimums pour chaque récolte.
